# EUROPEAN PATENT APPLICATION

(11) **EP 4 826 513 A1**
(43) Date of publication of application: **21.10.2026**
(21) Application number: 26172130.2
(22) Date of filing: 14.04.2026
(51) Int. Cl.: G06F 3/12

(54) **IMAGE FORMING APPARATUS, CONTROL METHOD, AND PROGRAM**

(30) Priority: 18.04.2025 JP 2025068473
(71) Applicant: Sharp Kabushiki Kaisha, Sakai City, Osaka 590-8522 (JP)
(72) Inventor: WASHIDA, Kento, Osaka, 590-8522 (JP)
(74) Representative: Müller Hoffmann & Partner

(57) **Abstract**

An image forming apparatus (101) includes: a communicator (151) that communicates with a first information processing apparatus (201) and a second information processing apparatus (301), each implementing generative AI; a printer (141); and one or more controllers (111). The one or more controllers (111) receive a print job including print data from the first information processing apparatus (201) via the communicator (151), transmit, when the print job includes an instruction to generate a first prompt for content confirmation for the print data, an output format of the first prompt corresponding to a user who has transmitted the print job, an instruction for content confirmation for the print data corresponding to a type of the print data, and the instruction to generate the first prompt to the second information processing apparatus (301), receive, from the second information processing apparatus (301), a first result that is a result of the content confirmation for the print data based on the first prompt, and transmit the first result to the first information processing apparatus (201).

## Description

### CROSS-REFERENCE TO RELATED APPLICATION

The present application claims priority from Japanese Application JP2025-068473, the content to which is hereby incorporated by reference into this application.

### BACKGROUND OF THE INVENTION

### 1. Field of the Invention

The present disclosure relates to an image forming apparatus, a control method, and a program.

### 2. Description of the Related Art

In recent years, materials have been checked using generative artificial intelligence (AI).

In the related art, there is known a technique for shortening a time until a processing result of confirmation processing is obtained, as compared with a case where the entire confirmation processing of confirming whether a plurality of requirement items required when an image of a digitized document is stored is performed by image processing using artificial intelligence.

### SUMMARY

In checking a material by using generative AI, an appropriate prompt is required to obtain an appropriate output. However, since contents to be checked differ depending on a type of the material and a user, the appropriate prompt differs depending on the type of the material and the user. Thus, it takes time and effort to input the appropriate prompt according to the type of the material and the user every time the material is checked.

An object of an aspect of the present disclosure is to provide an image forming apparatus or the like for improving convenience of generation of a prompt for content confirmation for print data.

An image forming apparatus according to an aspect of the present disclosure includes: a communicator that communicates with a first information processing apparatus and a second information processing apparatus, each implementing generative AI; a printer; and one or more controllers. The one or more controllers receive a print job including print data from the first information processing apparatus via the communicator, transmit, when the print job includes an instruction to generate a first prompt for content confirmation for the print data, an output format of the first prompt corresponding to a user who has transmitted the print job, an instruction for content confirmation for the print data corresponding to a type of the print data, and the instruction to generate the first prompt to the second information processing apparatus, receive, from the second information processing apparatus, a first result that is a result of the content confirmation for the print data based on the first prompt, and transmit the first result to the first information processing apparatus.

A control method according to an aspect of the present disclosure is a control method executed by an image forming apparatus that communicates with a first information processing apparatus and a second information processing apparatus, each implementing generative AI. The control method includes: receiving a print job including print data from the first information processing apparatus; transmitting, when the print job includes an instruction to generate a first prompt for content confirmation for the print data, an output format of the first prompt corresponding to a user who has transmitted the print job, an instruction for content confirmation for the print data corresponding to a type of the print data, and the instruction to generate the first prompt to the second information processing apparatus; receiving, from the second information processing apparatus, a first result that is a result of the content confirmation for the print data based on the first prompt; and transmitting the first result to the first information processing apparatus.

A program according to an aspect of the present disclosure causes a computer connected to an image forming apparatus via a network to execute: displaying an instruction as to whether to generate a prompt for content confirmation for print data in a selectable manner; and transmitting the selected instruction as to whether to generate the prompt and a print job including the print data to the image forming apparatus.

The image forming apparatus and the like according to an aspect of the present disclosure can improve convenience of generation of the prompt for the content confirmation for the print data.

### BRIEF DESCRIPTION OF THE DRAWINGS

FIG. 1 is a configuration diagram of a system according to an embodiment.
FIG. 2 is a functional block diagram of an MFP according to an embodiment.
FIG. 3 is an example of user information.
FIG. 4 is an example of file information.
FIG. 5 is a functional block diagram of a PC according to an embodiment.
FIG. 6A is a flowchart of control processing of a system according to an embodiment.
FIG. 6B is a flowchart of control processing of a system according to an embodiment.
FIG. 7A is an example of a document for approval.
FIG. 7B is an example of a product introduction.
FIG. 8 is an example of a print execution screen.
FIG. 9A is an example of a display screen.
FIG. 9B is an example of a display screen.
FIG. 10A is a sequence diagram illustrating control processing of a system according to an embodiment.
FIG. 10B is a sequence diagram illustrating control processing of a system according to an embodiment.

### DETAILED DESCRIPTION OF THE INVENTION

An embodiment is described below with reference to the drawings. In the drawings, the same or equivalent elements are denoted by the same reference signs, and redundant descriptions are omitted.

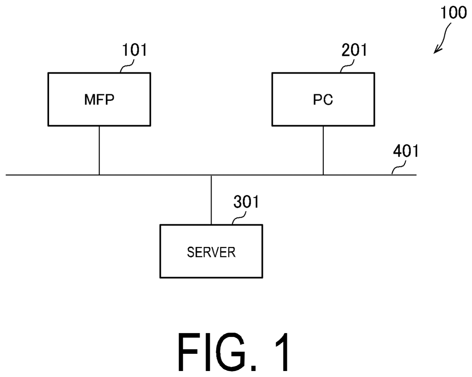

FIG. 1 is a configuration diagram of a system according to an embodiment.

A system 100 includes a multifunction peripheral (MFP) 101, a personal computer (PC) 201, and a server 301. The MFP 101, the PC 201, and the server 301 are connected via a network 401 such as a local area network (LAN), and can communicate with each other. Communication between the MFP 101 and the server 301 is preferably encrypted communication in consideration of security. The MFP 101 is an example of an image forming apparatus. The PC 201 and the server 301 are examples of an information processing apparatus.

The MFP 101 has, for example, a plurality of functions such as scanning, printing, and copying of a document. The MFP 101 receives a print job including print data such as characters and images to be printed and print setting information from the PC 201, and executes printing using the print data included in the print job.

The PC 201 creates print data including, for example, a document, a table, an image, and print setting information, and transmits a print job including the created print data to the MFP 101.

The server 301 implements an interactive generative artificial intelligence (AI) (for example, ChatGPT (registered trademark)) using natural language processing and machine learning. The generative AI of the server 301 receives a prompt including an instruction or a question from the MFP 101, generates a result according to the received prompt, and transmits the result to the MFP 101. The generative AI generates, for example, a prompt.

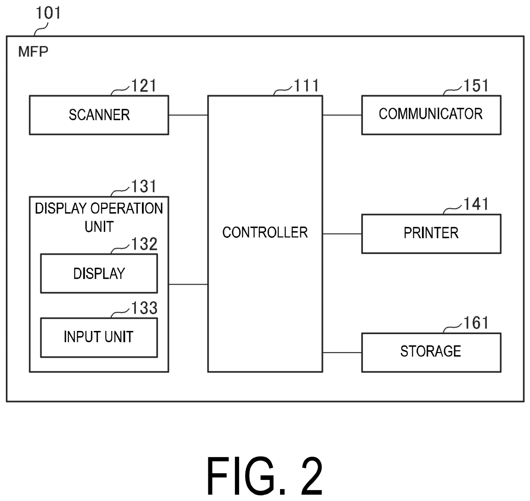

FIG. 2 is a functional block diagram of the MFP according to an embodiment.

The MFP 101 includes a controller 111, a scanner 121, a display operation unit 131, a printer 141, a communicator 151, and a storage 161.

The controller 111 performs control of the MFP 101, such as scanning, printing, and copying. The controller 111 is implemented by, for example, one or more processors such as central processing units (CPUs), or one or more logic circuits (hardware) formed in an integrated circuit (IC) chip, or the like.

The scanner 121 reads a document placed on a document table (not illustrated) of the MFP 101 or the like and generates image data of the read document.

The display operation unit 131 displays various types of information, and receives an operation input from a user. The display operation unit 131 is, for example, a touch panel. The display operation unit 131 includes a display 132 and an input unit 133. The display 132 performs various types of display according to display control signals from the controller 111. The display 132 is, for example, a liquid crystal display, an organic electro-luminescence (EL) display, or the like. The input unit 133 is, for example, a position input device, and detects coordinates of a contact position with a finger, a touch pen, or the like at the input unit 133, and outputs the detected coordinates to the controller 111. Further, the input unit 133 may also be hardware keys such as operation buttons.

The printer 141 prints characters, images, and the like on a recording medium such as paper supplied from a feeder (not illustrated) based on print data included in a print job received from the PC 201 via the communicator 151 or print data stored in the storage 161.

Under the control of the controller 111, the communicator 151 communicates with the PC 201 and the server 301, and performs data conversion associated with the communication. The communicator 151 is, for example, a wired communication interface or a wireless communication interface, and specifically, is, for example, a communication interface such as Ethernet (registered trademark) or Wi-Fi (registered trademark).

The storage 161 stores various programs and various types of data necessary for operating the MFP 101. The storage 161 may be constituted by, for example, one or more storage devices such as random access memories (RAMs), hard disk drives (HDDs), solid state drives (SSDs), or read only memories (ROMs). The storage 161 stores user information and file information. The user information and the file information will be described later.

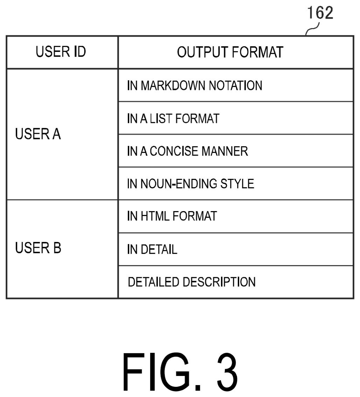

FIG. 3 is an example of the user information.

User information 162 stores a user ID and an output format in association with each other.

The user ID is identification information for identifying a user.

The output format indicates an output format of a confirmation result output by the generative AI. For example, when user ID = user A, the generative AI outputs the confirmation result in Markdown notation, in a list format, in a concise manner, and in noun-ending style.

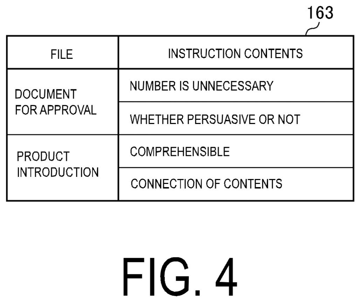

FIG. 4 is an example of the file information.

File information 163 stores files and instruction contents in association with each other.

The file indicates a type of the file (print data).

The instruction contents indicate instructions for content confirmation (check processing) executed by the generative AI on the corresponding file. For example, it is indicated to instruct the document that the number need not to be confirmed and confirm whether the contents (for example, the reason for purchase and the reason for selection) of the document for approval are persuasive.

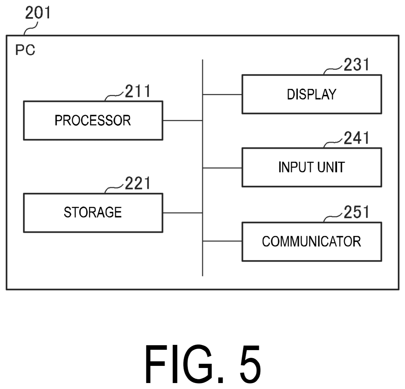

FIG. 5 is a functional block diagram of the PC according to an embodiment.

The PC 201 includes a processor 211, a storage 221, a display 231, an input unit 241, and a communicator 251.

The processor 211 controls the PC 201. The processor 211 is implemented by, for example, one or more processors such as CPUs. The processor 211 transmits the print job to the MFP 101 via the communicator 251.

The storage 221 stores various programs and various types of data necessary for operating the PC 201. The storage 221 stores a printer driver (program) that can perform print setting related to a print job to be transmitted to the MFP 101. The storage 221 can be configured by one or more storage devices such as RAMs, HDDs, SSDs, or ROMs.

The display 231 performs various types of display. The display 231 is, for example, a liquid crystal display, an organic EL display, or the like.

The input unit 241 receives inputs of operations and information from the user. The input unit 241 is, for example, a keyboard, a mouse, a touch pad, or the like.

The communicator 251 communicates with the MFP 101 under the control of the processor 211 and performs data conversion associated with the communication. The communicator 251 is, for example, a wired communication interface or a wireless communication interface, and specifically, is, for example, a communication interface such as Ethernet (registered trademark) or Wi-Fi (registered trademark).

A printer driver that can perform print settings and the like according to the print job to be transmitted to the MFP 101 is installed in the PC 201. The processor 211 reads the printer driver from the storage 221 and executes the printer driver, thereby performing various settings of the MFP 101, print processing including transmission of the print job, and the like. The print job includes print data, an instruction for the content confirmation for the print data, and an instruction for automatic generation of the prompt.

Next, processing of the system 100 according to an embodiment will be described.

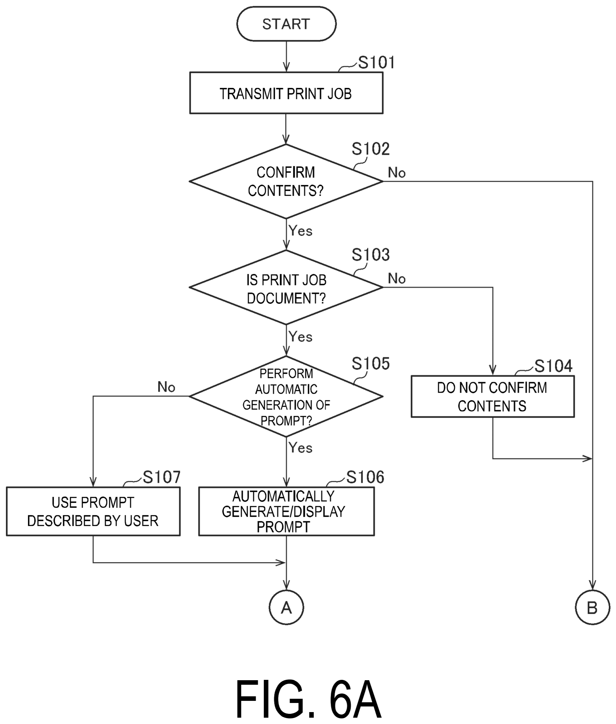

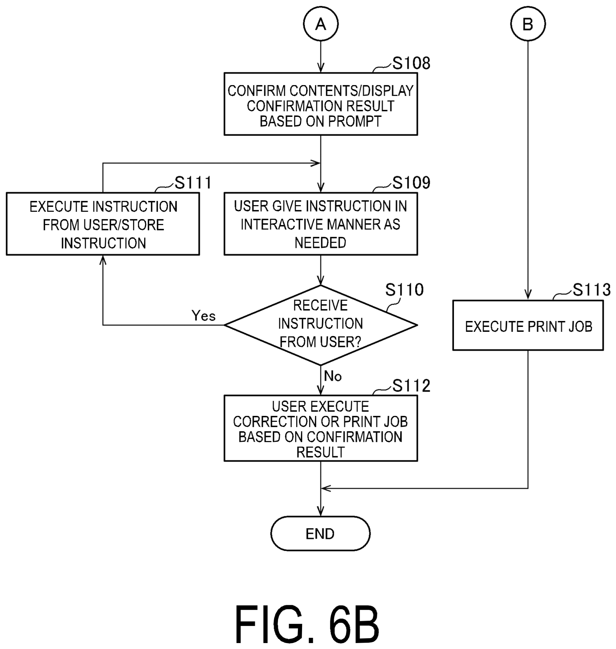

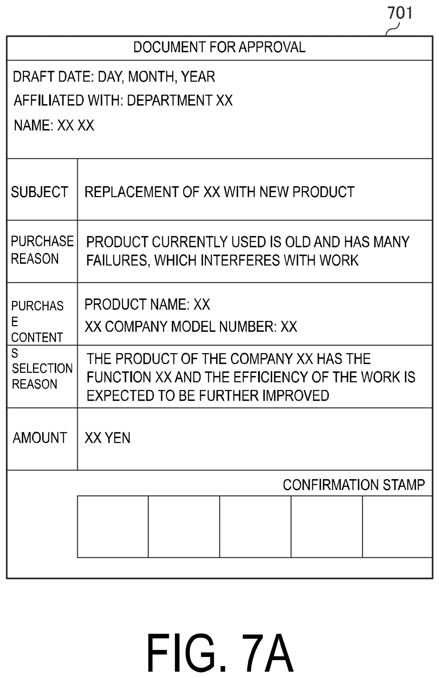

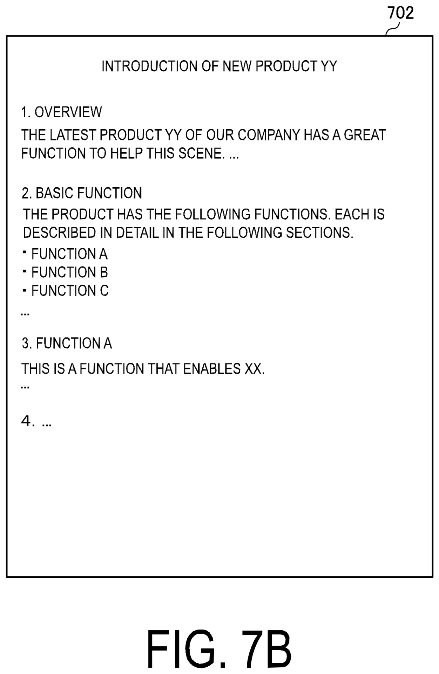

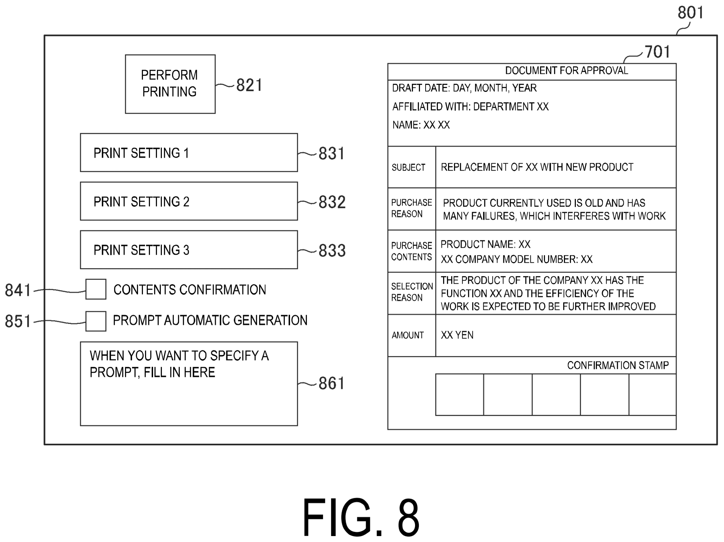

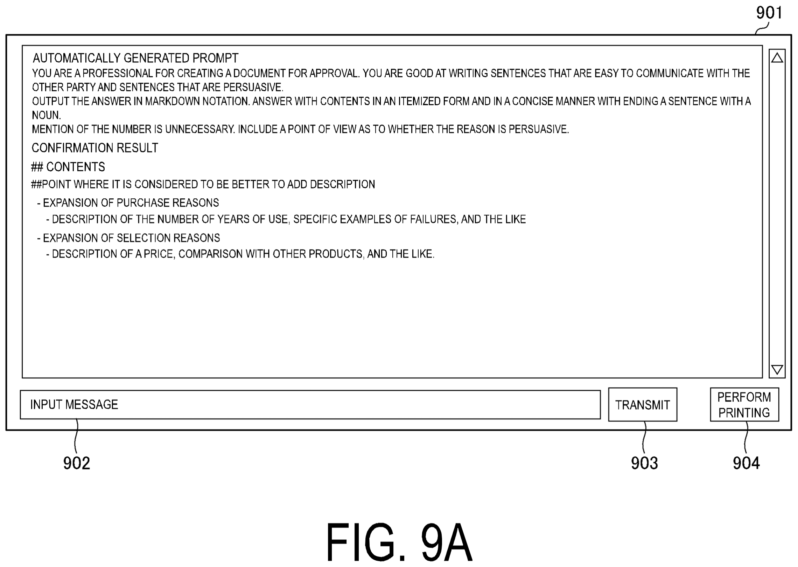

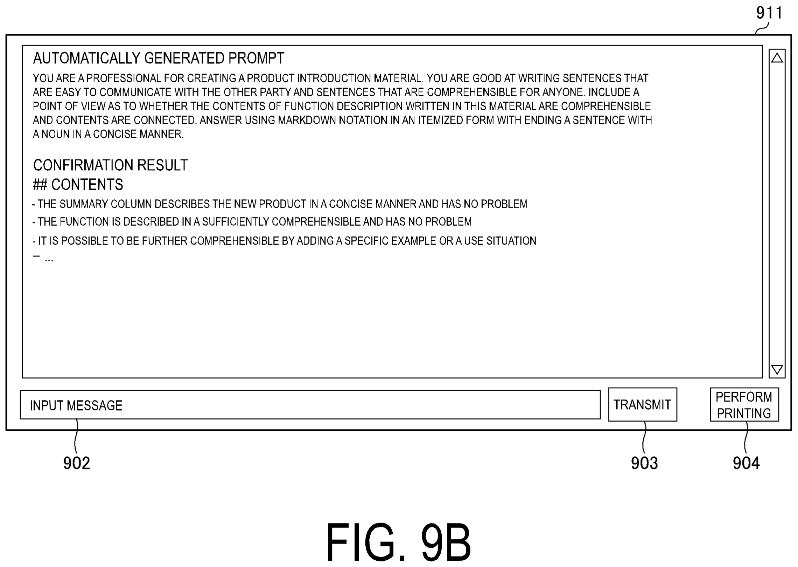

FIGS. 6A and 6B are flowcharts of control processing of a system according to an embodiment. FIG. 7A is an example of a document for approval. FIG. 7B is an example of a product introduction. FIG. 8 is an example of a print execution screen. FIGS. 9A and 9B are examples of display screens.

It is assumed that the processor 211 in the PC 201 is executing a document creation application, and the user has created a document by using the document creation application. The user ID of the user is assumed to be user A. For example, the user creates a document for approval 701 as illustrated in FIG. 7A. Alternatively, for example, the user creates a product introduction 702 as illustrated in FIG. 7B. The user presses a print button on the document creation application in order to print the created document, and the processor 211 reads the printer driver from the storage 221 and executes the printer driver, and displays a print execution screen 801 (FIG. 8) on the display 231. When the document for approval 701 is created, a reduced image (preview image) of the document for approval 701, which is the created document (that is, print data), a print start button 821, setting buttons 831 to 833 for setting printing, a checkbox 841 for selecting whether to perform the content confirmation for the print data, a checkbox 851 for selecting whether to perform automatic generation of the prompt for the content confirmation for the print data, and a prompt input box 861 are displayed on the print execution screen 801. As described above, an instruction as to whether to perform the automatic generation of the prompt for the content confirmation for the print data is displayed by the checkbox 851 in a selectable manner on the print execution screen 801. The user checks the checkbox 841 when performing the content confirmation for the print data, and checks the checkbox 851 when automatically generating the prompt for the content confirmation for the print data. When the user generates the prompt by himself/herself, the user may input the prompt in the prompt input box 861. The checkbox 851 and the input box 861 may be grayed out until the checkbox 841 is checked.

In step S101, the user performs, according to the user's desire, on the print execution screen 801, setting of printing, an instruction (checks the checkbox 841) as to whether to perform the content confirmation for the print data, an instruction (checks the checkbox 851) as to whether to perform the automatic generation of the prompt for the content confirmation for the print data, and input of the prompt when not performing the automatic generation of the prompt. When the user selects the print start button 821, the processor 211 transmits the print job including the user ID of the user, the print data, the instruction (content confirmation instruction) as to whether to perform the content confirmation for the print data, and the instruction (automatic generation instruction) as to whether to perform the automatic generation of the prompt for the content confirmation for the print data to the MFP 101 via the communicator 251. When the prompt is input in the input box 861, the processor 211 also includes the prompt in the print job.

In step S102, the controller 111 receives the print job via the communicator 151, and determines whether to perform the content confirmation for the print data based on the content confirmation instruction included in the print job. When it is determined to perform the content confirmation for the print data, the control proceeds to step S103, and when it is determined not to perform the content confirmation for the print data, the control proceeds to step S113.

In step S103, the controller 111 determines whether the print data included in the print job is a document. When the print data included in the print job is the document, the controller 111 determines the type of the document (for example, a document for approval and a product introduction). The controller 111 performs, for example, character recognition processing on the print data, and determines whether the print data is the document based on the result of the character recognition processing. When the print data is the document, the controller 111 determines the type of the document based on a filename (for example, document for approval.doc or product introduction□□.doc) of the print data. When it is determined that the print data is the document, control proceeds to step S105, and when it is determined that the print data is not the document, the control proceeds to step S104.

In step S104, since the print data is not the document, the controller 111 does not perform the content confirmation for the print data, and the control proceeds to step S113.

In step S105, the controller 111 determines whether to perform the automatic generation of the prompt for the content confirmation for the print data based on the automatic generation instruction included in the print job. When it is determined to perform the automatic generation of the prompt, the control proceeds to step S106, and when it is determined not to perform the automatic generation of the prompt, the control proceeds to step S107.

In step S106, the controller 111 instructs the server for the generation of the prompt based on the user information 162 and the file information 163. Specifically, the controller 111 transmits, to the server 301 via the communicator 151, an output format corresponding to the user ID of the user information 162 that matches the user ID included in the print job, instruction contents corresponding to a file of the file information 163 that matches a type of the document of the print data, and an instruction to generate the prompt for the content confirmation for the print data by using the output format and the instruction contents. Specifically, for example, when the user ID included in the print job is the user A and the type of the document of the print data is the document for approval, the controller 111 transmits, to the server 301 via the communicator 151, "in Markdown notation", "in a list format", "in a concise manner", and "in noun-ending style", which are the output formats of the user information 162, "number is unnecessary" and "whether persuasive or not", which are the instruction contents of the file information 163, and an instruction to generate the prompt for performing the content confirmation for the print data by using the output formats and the instruction contents. Specifically, for example, when the user ID included in the print job is the user A and the type of the document of the print data is the product introduction, the controller 111 transmits, to the server 301 via the communicator 151, "in Markdown notation", "in a list format", "in a concise manner", and "in noun-ending style", which are the output formats of the user information 162, "comprehensible" and "connection of contents", which are the instruction contents of the file information 163, and an instruction to generate the prompt for performing the content confirmation for the print data by using the output formats and the instruction contents. The instruction to generate the prompt for the content confirmation for the print data is, for example, a prompt to be input to the generative AI, and is "Create a prompt including the contents of the following words for passing to the ChatGPT. Make the format of the prompt a sentence in a polite language style rather than in a list format. "In Markdown notation", "in a list format", "in a concise manner", "in noun-ending style", "comprehensible", and "connection of contents".

The server 301 receives, from the MFP 101, the output format corresponding to the user ID of the user information 162 that matches the user ID included in the print job, the instruction contents corresponding to the file of the file information 163 that matches the type of the document of the print data, and the instruction to generate the prompt for the content confirmation for the print data by using the output format and the instruction contents, generates the prompt for the content confirmation for the print data based on the received output format, instruction contents, and instruction to generate the prompt, and transmits the generated prompt to the MFP 101. The controller 111 receives the prompt via the communicator 151 and transmits the received prompt to the PC 201. The processor 211 receives the prompt via the communicator 251 and displays the received prompt on the display 231.

Specifically, for example, when the user ID included in the print job is the user A and the type of the document of the print data is the document for approval, the prompt generated in the server 301 is such that "You are a professional for creating a document for approval. You are good at writing sentences that are easy to communicate with the other party and sentences that are persuasive. Output the answer in Markdown notation. Answer with contents in a list format, in a concise manner, and in noun-ending style. Mention of the number is unnecessary. Include a point of view as to whether the reason is persuasive". The display 231 displays, as an automatically generated prompt, a message "You are a professional for creating a document for approval. You are good at writing sentences that are easy to communicate with the other party and sentences that are persuasive. Output the answer in Markdown notation. Answer with contents in a list format, in a concise manner, and in noun-ending style. Mention of the number is unnecessary. Include a point of view as to whether the reason is persuasive". Specifically, for example, when the user ID included in the print job is the user A and the type of the material of the print data is the product introduction, the prompt generated in the server 301 is such that" You are a professional for creating a product introduction material. You are good at writing sentences that are easy to communicate with the other party and sentences that are comprehensible for anyone. Include a point of view as to whether the contents of function description written in this material are comprehensible and contents are connected. Answer using Markdown notation in a list format, in noun-ending style, and in a concise manner". The display 231 displays, as an automatically generated prompt, a message "You are a professional for creating a product introduction material. You are good at writing sentences that are easy to communicate with the other party and sentences that are comprehensible for anyone. Include a point of view as to whether the contents of function description written in this material are comprehensible and contents are connected. Answer using Markdown notation in a list format, in noun-ending style, and in a concise manner". The controller 111 transmits the print data and the prompt received from the server 301 to the server 301 via the communicator 151. That is, the controller 111 instructs the server to perform the content confirmation for the print data according to the prompt.

In step S107, the controller 111 transmits the print data and the prompt included in the print job (i.e., a prompt described by the user) to the server 301 via the communicator 151. That is, the controller 111 instructs the server to perform the content confirmation for the print data according to the prompt. The controller 111 stores the prompt included in the print job in the user information 162 and the file information 163. Specifically, the controller 111 analyzes the prompt included in the print job, and extracts an instruction for the output format included in the prompt and an instruction for the confirmation processing for the print data. The controller 111 stores the instruction for the output format included in the prompt as the output format of the user information 162, in association with the user ID of the user information 162 that matches the user ID included in the print job. The controller 111 stores the instruction for the confirmation processing for the print data included in the prompt as the instruction contents of the file information 163 in association with the file of the file information 163 that matches the type of the document of the print data determined in step S103. Specifically, for example, when the user ID included in the print job is user A, the type of the document of the print data is the document for approval, and the prompts are "Make a sentence in a list format, in a concise manner, and in noun-ending style and output a content field in Markdown notation again" and "This document does not require a description of the number of purchases", the controller 111 analyzes the prompts, extracts "in Markdown notation", "in a list format", "in a concise manner", and "in noun-ending style" as the instructions for the output format included in the prompts, and extracts "number is unnecessary" as the instruction for the confirmation processing for the print data. The controller 111 stores "in Markdown notation", "in a list format", "in a concise manner", and "in noun-ending style" as the output formats of the user information 162, in association with the user A. The controller 111 stores "the number is unnecessary" as the instruction contents of the file information 163, in association with the document for approval.

In step S108, the generative AI of the server 301 receives the print data and the prompt from the MFP 101, confirms the contents of the print data based on the received prompt, generates a confirmation result, and transmits the confirmation result to the MFP 101. The controller 111 receives the confirmation result from the server 301 via the communicator 151, and transmits the confirmation result to the PC 201 via the communicator 151. The processor 211 receives the confirmation result via the communicator 251 and displays the confirmation result on the display 231. Specifically, for example, when the user ID included in the print job is the user A and the type of the document of the print data is the document for approval, a display screen 901 as illustrated in FIG. 9A is displayed on the display 231. The display screen 901 displays the prompt generated in step S106 and the confirmation result based on the prompt. Specifically, as the confirmation result, a message "## Point where it is considered to be better to add description
- Expansion of purchase reasons
- Description of the number of years of use, specific examples of failures, and the like
- Expansion of selection reasons
- Description of a price, comparison with other products, and the like." is displayed. The display screen 901 displays an input box 902 for inputting a prompt, a transmission button 903 for transmitting the input prompt to the MFP 101, and a print button 904 for starting printing of the content-confirmed print data.

Specifically, for example, when the user ID included in the print job is the user A and the type of the document of the print data is the product introduction, a display screen 911 as illustrated in FIG. 9B is displayed on the display 231. The display screen 911 displays the prompt generated in step S106 and the confirmation result based on the prompt. Specifically, as the confirmation result, a message "## Contents
- The Summary column describes the new product in a concise manner and has no problem
- The function is described in a sufficiently comprehensible manner and has no problem
- It is possible to be further comprehensible by adding a specific example or a use situation
- ..." is displayed. The display screen 911 displays an input box 902 for inputting a prompt, a transmission button 903 for transmitting the input prompt to the MFP 101, and a print button 904 for starting printing of the content-confirmed print data.

In step S109, when there is a question or an additional confirmation item for the confirmation result, the user instructs the server 301 in an interactive manner via the MFP 101. Specifically, when there is the question or the additional confirmation item for the confirmation result, the user inputs a prompt (instruction) in the input box 902 by using the input unit 241, the processor 211 transmits the input prompt to the MFP 101 via the communicator 251, and the controller 111 receives the prompt from the PC 201 via the communicator 151 and transmits the received prompt to the server 301. The server 301 generates a response to the received prompt and transmits the response to the MFP 101, the controller 111 transmits the response received from the server 301 to the PC 201, and the processor 211 displays the received response on the display 231.

In step S110, the controller 111 determines whether there is the prompt (instruction) input from the user in step S109. When it is determined that there is the prompt input from the user, the control proceeds to step S111, and when it is determined that there is no prompt input from the user, the control proceeds to step S112.

In step S111, the controller 111 stores the prompt input in step S109 in the user information 162 and the file information 163. Specifically, the controller 111 analyzes the prompt input in step S109, and extracts the instruction for the output format and the instruction for the content confirmation for the print data which are included in the prompt. The controller 111 stores the instruction for the output format included in the input prompt as the output format of the user information 162, in association with the user ID of the user information 162 that matches the user ID included in the print job. The controller 111 stores the instruction for the content confirmation for the print data included in the input prompt as the instruction contents of the file information 163, in association with the file of the file information 163 that matches the type of the document of the print data determined in step S103.

In step S112, the user corrects the created document based on the confirmation result. Alternatively, the controller 111 executes the print job. Specifically, the controller 111 prints the print data included in the print job by using the printer 141.

In step S113, the controller 111 executes the print job. Specifically, the controller 111 prints the print data included in the print job by using the printer 141.

As a variation of the embodiment, the PC 201 may instruct the server 301 to generate the prompt and to perform the content confirmation for the print data at the same time. In this case, the server 301 may perform the content confirmation for the print data based on the generated prompt and transmit the generated prompt and the confirmation result to the MFP 101, the MFP 101 may transmit the received confirmation result and the prompt to the PC 201, and the PC 201 may display the received confirmation result and the prompt on the display 231.

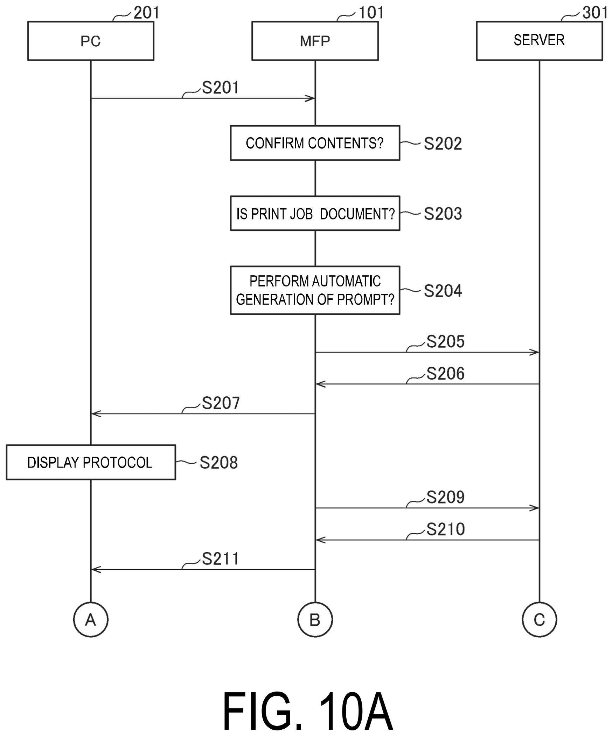

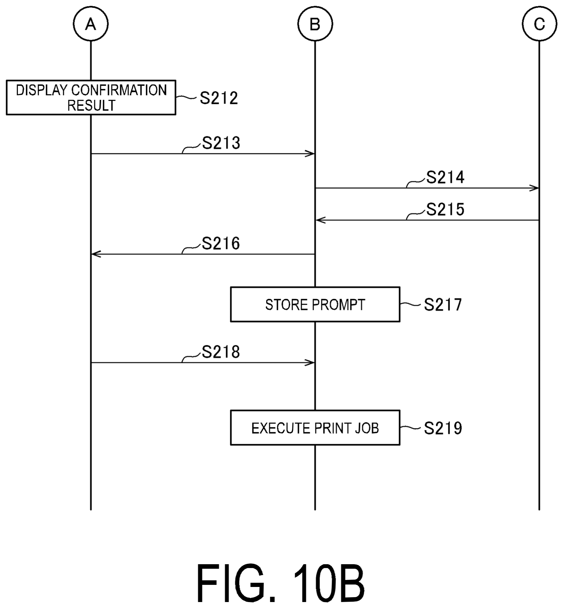

FIGS. 10A and 10B are sequence diagrams each illustrating control processing of the system according to an embodiment. Here, a case where the user creates a document for approval and instructs the content confirmation for the document for approval and the automatic generation of the prompt will be described.

It is assumed that the processor 211 in the PC 201 is executing a document creation application, and the user has created a document by using the document creation application. The user ID of the user is assumed to be user A. The user selects a print button on the document creation application in order to print the created document, and the processor 211 reads the printer driver from the storage 221 and executes the printer driver, and displays a print execution screen 801 (FIG. 8) on the display 231.

In step S201, the user performs, according to the user's desire, on the print execution screen 801, setting of printing, an instruction (checks the checkbox 841) as to whether to perform the content confirmation for the print data, an instruction (checks the checkbox 851) as to whether to perform the automatic generation of the prompt for the content confirmation for the print data, and input of the prompt when not performing the automatic generation of the prompt. When the user selects the print start button 821, the processor 211 transmits the print job including the user ID of the user, the print data (document), the instruction (content confirmation instruction) as to whether to perform the content confirmation for the print data, and the instruction (automatic generation instruction) as to whether to perform the automatic generation of the prompt for the content confirmation for the print data to the MFP 101 via the communicator 251. It is assumed that the user has checked the checkbox 841 and the checkbox 851.

In step S202, the controller 111 receives the print job via the communicator 151, and determines whether to perform the content confirmation for the print data based on the content confirmation instruction included in the print job. As described above, since the user has checked the checkbox 841 and has instructed to perform the content confirmation for the print data, the controller 111 determines to perform the content confirmation for the print data.

In step S203, the controller 111 determines whether the print data included in the print job is a document. As described above, since the document created by the user is the document for approval, the controller 111 determines that the print data included in the print job is a document.

In step S204, the controller 111 determines whether to perform the automatic generation of the prompt for the content confirmation for the print data based on the automatic generation instruction included in the print job. As described above, since the user has checked the checkbox 851 and has instructed to perform the automatic generation of the prompt, the controller 111 determines to perform the automatic generation of the prompt.

In step S205, the controller 111 instructs the server for the generation of the prompt based on the user information 162 and the file information 163. Specifically, since the user ID included in the print job is the user A and the type of the document of the print data is the document for approval, the controller 111 transmits, to the server via the communicator 151, "in Markdown notation", "in a list format", "in a concise manner", and "in noun-ending style", which are the output formats of the user information 162, "number is unnecessary" and "whether persuasive or not", which are the instruction contents of the file information 163, and an instruction to generate the prompt for performing the content confirmation for the print data by using the output formats and the instruction contents.

In step S206, the server 301 receives the output format of the user information 162, the instruction contents of the file information 163, and the instruction to generate the prompt for the content confirmation for the print data by using the output format and the instruction contents, generates the prompt for the content confirmation for the print data based on the received output format, instruction contents, and instruction for the generation of the prompt, and transmits the generated prompt to the MFP 101. Specifically, the server 301 generates, as a prompt, a message "You are a professional for creating a document for approval. You are good at writing sentences that are easy to communicate with the other party and sentences that are persuasive. Output the answer in Markdown notation. Answer with contents in a list format, in a concise manner, and in noun-ending style. Mention of the number is unnecessary. Include a point of view as to whether the reason is persuasive", and transmits the message to the MFP 101.

In step S207, the controller 111 receives the prompt via the communicator 151 and transmits the received prompt to the PC 201.

In step S208, the processor 211 receives the prompt via the communicator 251 and displays the received prompt on the display 231.

In step S209, the controller 111 transmits the print data and the prompt received from the server 301 to the server 301 via the communicator 151. Specifically, the controller 111 transmits the document for approval and a prompt "You are a professional for creating a document for approval. You are good at writing sentences that are easy to communicate with the other party and sentences that are persuasive. Output the answer in Markdown notation. Answer with contents in a list format, in a concise manner, and in noun-ending style. Mention of the number is unnecessary. Include a point of view as to whether the reason is persuasive" to the server 301 via the communicator 151.

In step S210, the generative AI of the server 301 receives the print data and the prompt from the MFP 101, confirms the contents of the print data based on the received prompt, generates a confirmation result, and transmits the confirmation result to the MFP 101.

In step S211, the controller 111 receives the confirmation result via the communicator 151, and transmits the confirmation result to the PC 201.

In step S212, the processor 211 receives the confirmation result via the communicator 251 and displays the confirmation result on the display 231. Specifically, since the user ID included in the print job is the user A and the type of the document of the print data is the document for approval, a display screen 901 as illustrated in FIG. 9A is displayed on the display 231.

In step S213, the user inputs the question or the additional confirmation item for the confirmation result as the prompt (instruction) in the input box 902 by using the input unit 241, and the processor 211 transmits the input prompt to the MFP 101 via the communicator 251.

In step S214, the controller 111 receives the prompt from the PC 201 via the communicator 151, and transmits the received prompt to the server 301.

In step S215, the server 301 receives the prompt, generates a response to the received prompt, and transmits the response to the MFP 101.

In step S216, the controller 111 receives the response from the server 301 via the communicator 151, and transmits the received response to the PC 201. The processor 211 receives the response from the MFP 101 via the communicator 251 and displays the received response on the display 231.

In step S217, the controller 111 stores the prompt input in step S213 in the user information 162 and the file information 163. Specifically, the controller 111 analyzes the prompt input in step S213, and extracts the instruction for the output format and the instruction for the content confirmation for the print data included in the prompt. The controller 111 stores the instruction for the output format included in the input prompt as the output format of the user information 162, in association with the user A of the user information 162. The controller 111 stores the instruction for the content confirmation for the print data included in the input prompt as the instruction contents of the file information 163, in association with the document for approval of the file information 163.

In step S218, the processor 211 instructs the MFP 101 for execution of the print job. Specifically, the user selects the print button 904 on the display screen 901, and when the print button 904 is selected, the processor 211 instructs the MFP 101 to print the document for approval, which is the print data.

In step S219, the controller 111 receives the instruction for execution of the print job from the PC 201, and executes the print job. Specifically, the controller 111 prints the document for approval, which is the print data, by using the printer 141.

The MFP according to an embodiment can instruct generation of an appropriate prompt according to the user and the type of the document to the generative AI. This eliminates time and efforts for the user to input the prompt according to the user and the type of the document every time of the content confirmation, and improves convenience.

The MFP according to an embodiment can store the output format included in the input prompt in the user information, store the instruction for the content confirmation for the print data in the file information, and use the information when the instruction to generate the prompt is given later. This eliminates time and effort for the user to input the same prompt for the same user or the same type of document every time, and improves convenience.

The printer driver according to an embodiment can display the instruction as to whether to generate the prompt for the content confirmation for the print data in a selectable manner and instruct the generation of the prompt. This eliminates time and efforts for the user to input the prompt and improves convenience.

Note that the present disclosure is not limited to the embodiment described above and may be modified, and the above-described configuration can be replaced with a configuration that is substantially the same as the configuration illustrated in the embodiment described above, a configuration that achieves the same operations and effects, or a configuration that can achieve the same object. For example, the generative AI implemented in the server 301 may be implemented in the MFP 101, and the generative AI implemented in the MFP 101 may perform the processing of the server 301 described above, such as generation of the prompt and the content confirmation for the print data based on the prompt.

While there have been described what are at present considered to be certain embodiments of the invention, it will be understood that various modifications may be made thereto, and it is intended that the appended claim cover all such modifications as fall within the true spirit and scope of the invention.

## Claims

1. An image forming apparatus (101), comprising:
a communicator (151) that communicates with a first information processing apparatus (201) and a second information processing apparatus (301), each implementing generative AI;
a printer (141); and
one or more controllers (111),
wherein the one or more controllers (111)
receive a print job including print data from the first information processing apparatus (201) via the communicator (151),
transmit, when the print job includes an instruction to generate a first prompt for content confirmation for the print data, an output format of the first prompt corresponding to a user who has transmitted the print job, an instruction for content confirmation for the print data corresponding to a type of the print data, and the instruction to generate the first prompt to the second information processing apparatus (301),
receive, from the second information processing apparatus (301), a first result that is a result of the content confirmation for the print data based on the first prompt, and
transmit the first result to the first information processing apparatus (201).

2. The image forming apparatus (101) according to claim 1,
wherein the one or more controllers (111)
receive the first result and the first prompt from the second information processing apparatus (301) and
transmit the first result and the first prompt to the first information processing apparatus (201).

3. The image forming apparatus (101) according to claim 1, further comprising
a storage (161),
wherein the one or more controllers (111) cause the storage (161) to store user information associating the user with the output format of the prompt and file information associating the type of the print data with an instruction for content confirmation for the print data.

4. The image forming apparatus (101) according to claim 1,
wherein when the print job includes a second prompt, the one or more controllers (111)
transmit an output format included in the second prompt and an instruction for content confirmation for the print data included in the second prompt to the second information processing apparatus (301),
receive, from the second information processing apparatus (301), a second result that is a result of the content confirmation for the print data based on the second prompt, and
transmit the second result to the first information processing apparatus (201).

5. The image forming apparatus (101) according to claim 4,
wherein the one or more controllers (111) transmit the second result and the second prompt to the first information processing apparatus (201).

6. A control method executed by an image forming apparatus (101) that communicates with a first information processing apparatus (201) and a second information processing apparatus (301), each implementing generative AI, the control method comprising:
receiving a print job including print data from the first information processing apparatus (201);
transmitting, when the print job includes an instruction to generate a first prompt for content confirmation for the print data, an output format of the first prompt corresponding to a user who has transmitted the print job, an instruction for content confirmation for the print data corresponding to a type of the print data, and the instruction to generate the first prompt to the second information processing apparatus (301);
receiving, from the second information processing apparatus (301), a first result that is a result of the content confirmation for the print data based on the first prompt; and
transmitting the first result to the first information processing apparatus (201).

7. A program causing a computer (201) connected to an image forming apparatus (101) via a network to execute:
displaying an instruction as to whether to generate a prompt for content confirmation for print data in a selectable manner; and
transmitting an instruction as to whether to generate the prompt and a print job including the print data to the image forming apparatus (101).
